Europäisches Patentamt

European Patent Office

Office européen des brevets

(11) Publication number: **0 476 158 A1**

# EUROPEAN PATENT APPLICATION

(21) Application number: **90115825.3**

(22) Date of filing: **17.08.90**

(51) Int. Cl.5: **F16B 37/00**, F16B 35/04, F16B 5/02, F16B 23/00, //B25B13/00

(30) Priority: **15.08.90 US 566238**

(43) Date of publication of application:
**25.03.92 Bulletin 92/13**

(84) Designated Contracting States:
**CH DE FR GB IT LI**

(71) Applicant: **U-HAUL INTERNATIONAL, INC.**
**2727 N. Central Avenue**
**Phoenix, Arizona 85004(US)**

(72) Inventor: **McCoy, Milton Charles**
**1233 N. Mesa Drive, Apt. 2105**
**Mesa, Arizona 85201(US)**

(74) Representative: **Weber, Joachim, Dr. et al**
**Hoefer, Schmitz, Weber, Patentanwälte**
**Ludwig-Ganghofer-Strasse 20**
**W-8022 Grünwald/München(DE)**

(54) Extended grip range fastener and driver.

(57) The fastener comprises a bolt (11) having a head (14) and a threaded shank (15) receivable in an internally threaded barrel (21) projecting from one face (22) of the head (23) of a nut (12). The nut (12) has a driving recess (25) in its other, outer, face (24). The threaded passage (26) through said barrel (21) is in open communication with the driving recess (25) in said nut (12) whereby the bolt shank (15) can enter the driving recess (25) when the nut (12) is tightened on the bolt (11). The length of the bolt shank (15) is substantially equal to the combined length of the nut barrel (21) and the nut head (23) whereby the bolt shank (15) cannot project beyond the outer face (24) of the nut head (23) when the nut (12) is tightened on the bolt (11). A driving tool (13) is provided with an exterior surface (28) complementary to the inner surface of the driving recess (25) in the nut head (23). The driving tool (13) also has a recess (31) in the end thereof for loosely receiving the bolt shank (15) when and if it enters the driving recess (25).

Fig. 1

EP 0 476 158 A1

## Field of the Invention

This invention relates generally to threaded fasteners and particularly to bolt and nut fastener systems having extended grip ranges.

## Background of the Invention

Mechanical fasteners which are capable of fastening together materials varying widely in thickness are said to possess an extended grip range. Such fasteners offer significant economic advantages to those involved in their manufacture, distribution and use.

If a fastener is provided which is capable of fastening over a thickness range which formerly required the use of two or more different fasteners, the manufacturer has substantially reduced the number of sizes of fasteners he must tool up to manufacture and that he must maintain in inventory. The manufacturer thus can maintain a larger inventory of the extended range fasteners at the same or lower cost of maintaining multiple fastener inventories and assure shorter delivery times to the customers. And both the distributor and user of the extended range fastener are assured of cost savings because of the reduction in the variety of fasteners they must handle and store.

With conventional nut and bolt fasteners, the grip range can be extended by the simple expedient of increasing the length of the bolt. Obviously, in many applications a 3 cm. bolt can be used in applications requiring 1 cm. or 2 cm. bolts. But there are some disadvantages to using such extended range fasteners. In the first place, use of the 3 cm. bolt in the 1 cm. and 2 cm. applications likely results in the distal end of the bolt projecting beyond the extent of the nut. So special driving tools must sometimes be devised for holding or turning the nut.

Representative examples of special tools which have been devised for turning or holding nuts in such fasteners are described in the following United States patents: 2,527,157, granted October 24, 1950 to E. S. Snyder, et al., for "TOOL FOR APPLYING SHEET METAL NUTS OR STUBS"; 3,241,408, granted March 22, 1966 to L. D. McCauley, for "VEHICLE WHEEL NUT OR BOLT"; 3,648,549, granted March 14, 1972 to E. D. Siddall, for "INTERNALLY DRIVEN STOP NUT"; and 3,821,975, granted July 2, 1974 to L. C. Haker, for "AUTOMOTIVE WHEEL LOCK MEANS".

A further disadvantage to the long bolt approach to extended range fasteners is the hazard posed by the end of the bolt projecting beyond the nut after the fastener is in place. When such fasteners are utilized in fabricating the passenger or cargo spaces in motor vehicles, serious injury can be inflicted by the exposed threaded bolt on occupants of the vehicle. And such exposed bolt ends can interfere with the movement of cargo in a cargo space fabricated with elongated bolts.

There continues to be a need for an extended range nut and bolt fastener and driving tool combination which does not permit exposure of the free end of the bolt.

## Summary of the Invention

The fastener and drive combination of this invention contemplates the use of a nut and bolt fastener in which the bolt has a head and a threaded shank. The threaded shank is receivable in a threaded passage in a barrel portion of the nut projecting away from one face of the head of the nut. The other, or outer, face of the nut has a non-circular driving recess adapted to receive a complementary driving tool. The threaded passage in the nut barrel is in open communication with the driving recess and the driving tool has a recess in the end thereof so that the end of the bolt shank can enter the driving recess and the driving tool recess when the nut is tightened on the bolt with the driving tool in place. The length of the bolt shank is almost exactly equal to the combined length of the nut barrel and nut head so that while a substantial grip range is provided, the nut cannot be threaded into the bolt so far that the end of the bolt is exposed.

## Brief Description of the Drawing

This invention is described in greater detail hereinafter by reference to the accompanying drawing, wherein:

Fig. 1 is an exploded elevational view of the fastener and driving tool combination of this invention with the bolt and nut portions of the fastener shown in vertical section and a portion of the driving tool is broken away to show its interior;

Fig. 2 is an end view from the right of the nut portion of the fastener;

Fig. 3 is an end view from the left of the driving tool;

Fig. 4 is an end view of a nut portion of the fastener having an alternative driving recess;

Fig. 5 is a vertical sectional view through a panel to which the fastener is assembled in the shortest grip of its range; and

Fig. 6 is a view similar to Fig. 5, but showing the fastener assembled in the largest grip of its range.

## Detailed Description of the Preferred Embodiment

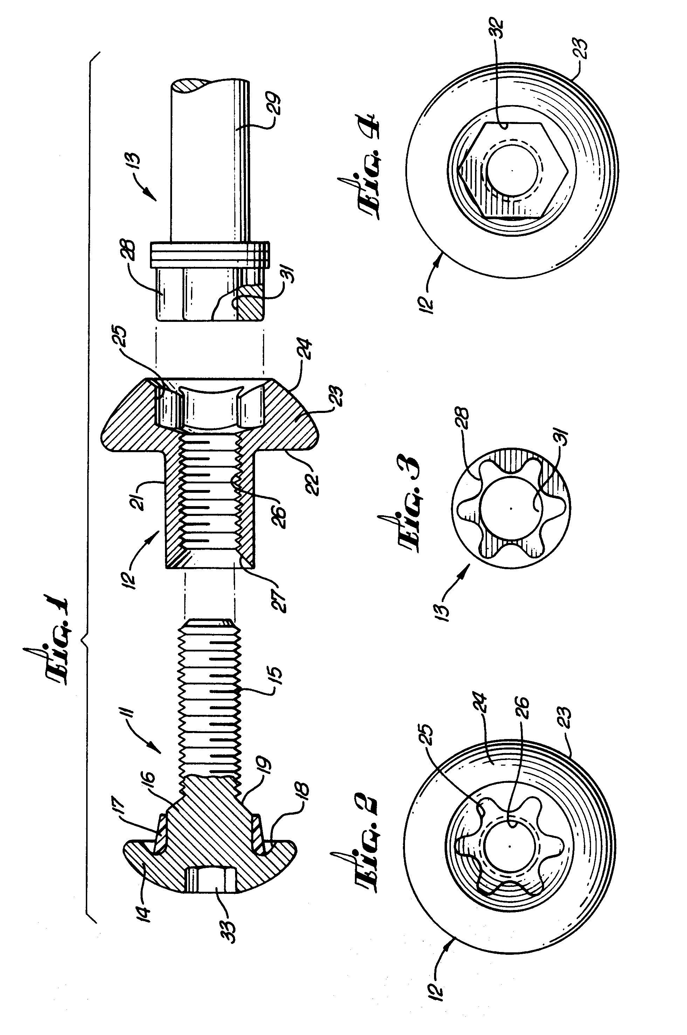

Referring particularly to Fig. 1, the fastener/driving tool combination of this invention comprises three basic components there illustrated. The fastener comprises two components, namely, a bolt, indicated generally by reference numeral 11 and a nut 12. The driving tool of the invention is designated by numeral 13.

Bolt 11 has a head 14 and a threaded elongated shank 15. For certain applications, as will be explained hereafter, the bolt may possess certain additional optional features, such as, a knurled locking shoulder 16 and a plastic sealing ring 17 surrounding the locking shoulder in position to be extruded into a sealing recess 18 in the face of the bolt head 14. A chamfered transition 19 between the bolt shank 15 and locking shoulder 16 provides a frusto-conical stop surface for abutment with nut 12.

Nut 12 comprises an internally threaded barrel 21 projecting from one face 22 of nut head 23. The opposite, or outer, face 24 of nut head 23 has a noncircular driving recess 25 formed therein. The threaded internal passage 26 in nut 12 is adapted to receive the shank 15 of bolt 11 and extends entirely through nut barrel 21 and nut head 23 and is in open communication with driving recess 25. The open end of nut barrel 21 is preferably chamfered as indicated at 27 to provide a frusto-conical stop surface to abut the chamfered stop surface 19 on bolt 11.

Driving tool 13 is employed to tighten nut 12 onto bolt 11. Tool 13 has at one end thereof a torque transmitting head 28 the outer surface of which is complementary to and closely matches the inner surface of driving recess 25 in the head 23 of nut 12. Driving tool 13 also preferably is provided with a shank portion 29 adapted to be received in the chuck of a power tool (not shown).

The torque transmitting head 28 of the tool 13 of this invention incorporates a further feature which contributes to the effectiveness of the fastener/tool combination. That feature is a recess 31 in the end of the tool for loosely receiving the end of bolt shank 15 whenever the nut 12 is tightened on the bolt shank to the extent that the shank enters the driving recess 25 in nut head 23 (see Fig. 5).

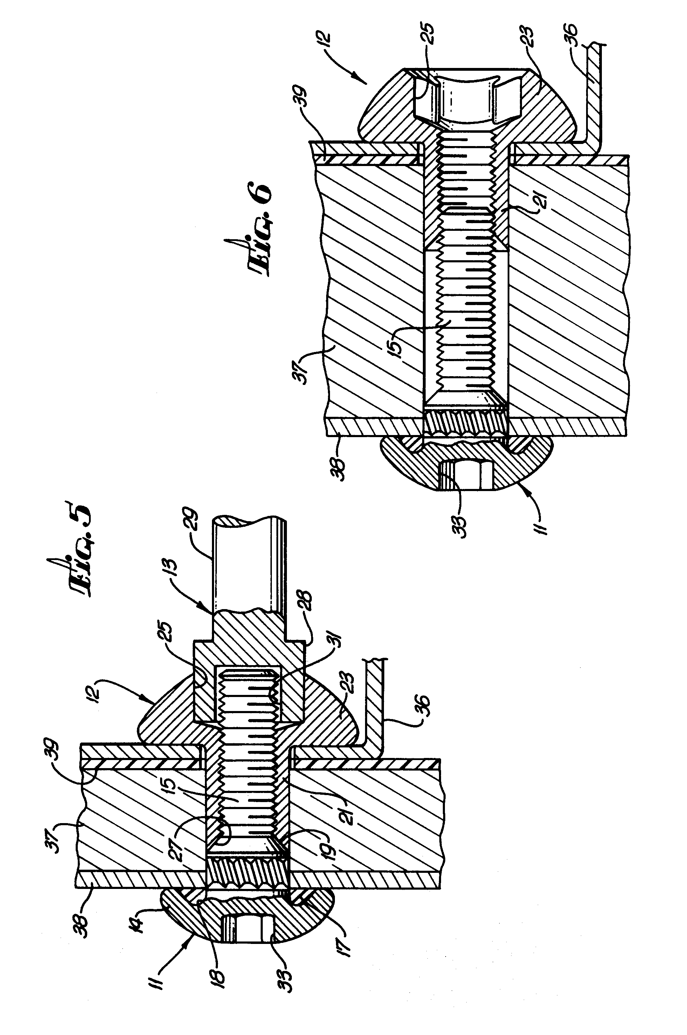

The multi-lobe torque transmitting head 28 on tool 13 illustrated in Figs. 1 to 3, is of the type disclosed in United States patent No. 3,584,667, granted June 15, 1971 to B. F. Reiland and assigned to Textron, Inc. That company manufactures a line of fasteners and tools utilizing this type of torque transmitting coupling. They are sold under the brand name "TORX".

It is to be understood, however, that other torque transmitting couplings can be employed in the fastener/tool combination of this invention. For example, there is illustrated in Fig. 4 another head configuration for nut 12. In this embodiment of the invention, the driving recess 32 in the head 23 of nut 12 has a more or less conventional hexagonal inner surface. Naturally, the driving tool (not shown) for the nut illustrated in Fig. 4 would have a hexagonal driving surface complementary with the hexagonal recess 32 in the nut. That tool must also be provided with a recess for receiving a portion of the shank 15 of bolt 11.

If desired, the head 14 of bolt 11 may also be provided with a similar driving recess 33 which normally would receive a mating tool to merely hold the bolt from turning when the nut 12 is tightened thereon.

It should be noted that the nut head 23 and the driving recess 25 therein are substantially larger than the bolt head 14 and its driving recess 33. The reason for this is that the nut driving tool 13 and, consequently, the nut driving recess 25 must be substantially larger to enable the tool 13 to have recess 31 therein to accommodate the end of bolt shank 15 when the fastener is employed in its shorter grip range. Nut head 23 preferably tapers to a thinner configuration outwardly of its driving recess 25 giving the head a dome-like shape. This configuration for the nut head 23 gives the head the requisite strength with a minimum amount of material.

Figs. 5 and 6 illustrate the extremities of the grip range which can be achieved with the fastener/tool combination of this invention. The application there shown involves fastening a bracket 36 to a metal clad, fiberglass reinforced wood panel 37. One face of panel 37 is covered by a thin metal sheet 38 and the other face is covered by a resin impregnated iberglass sheet 39. It is difficult to control the thickness of this type panel during manufacture. Consequently, finished panels often vary considerably in thickness. Fastening this type of panel is an ideal application for the fastener/tool combination of this invention because the extended grip range fastener can compensate for and accommodate different panel thicknesses.

Fig. 5 shows the fastener installed with its shortest grip. Driving tool 13 has driven nut 12 onto bolt 11 as far as it will go. Mating stop surfaces 19 and 27, respectively on the bolt 11 and the nut 12, are in engagement preventing bolt shank 15 from protruding beyond the outer face of nut head 23. Contact with the threaded end of shank 15 by persons or objects is thus prevented. But, of course, the recess 31 in the driving tool 13 permits the bolt shank 15 to extend fully into the nut head 23 to give the fastener its minimum grip.

When the bolt 11 is drawn or driven into panel 37, knurled locking shoulder 16 bites into metal sheet 38 to prevent the bolt 11 from turning with respect to the panel. Simultaneously, sealing ring 17 is clamped between the metal sheet and bolt head 14 sealing the opening through the panel 37.

Fig. 6 shows the fastener installed in its longest grip with a minimum of threads on bolt shank 15 engaging the threads in nut barrel 21.

The maximum grip range for the fastener/tool combination of this invention is achieved when the effective length of the bolt shank 15 is substantially equal to the combined length of nut barrel 21 and the length, or thickness, of nut head 23. For example, a fastener with a bolt shank of approximately 20 mm., a nut barrel of approximately 12 mm. and a nut head of approximately 8 mm. is capable of exhibiting a grip range of from 15 mm. to 28.7 mm.

**Claims**

1. A fastener and driver combination, said fastener comprising a bolt having a head and a threaded shank and a nut having a head with an outer face and an internally threaded barrel projecting from an inner face, said nut head having a non-circular driving recess in the outer face thereof, said threaded barrel providing an elongated threaded passage for receiving the shank of said bolt, said passage being in open communication with said driving recess whereby said shank can enter said recess when said nut is tightened on said bolt, the length of said bolt shank being substantially equal to the combined length of said nut barrel and said nut head, said driver having an outer surface having a configuration complementary with the non-circular driving recess in said nut head whereby said driver fits snugly within said recess in said nut head, said driver further having a recess in the end thereof for loosely receiving the end of said bolt shank.

2. The combination recited in Claim 1 further characterized in that the end of said nut barrel and the head of said bolt have complementary abutting surfaces which limit the extent to which said nut can be tightened on said bolt.

3. The combination recited in Claim 2 further characterized in that the abutting surfaces on said bolt and said nut are frusto-conical surfaces.

4. The combination recited in Claim 1 further characterized in that the head on said nut is substantially larger than the head on said bolt to accommodate said driving recess.

5. The combination recited in Claim 1 further characterized in that the head on said nut is substantially larger in diameter than the diameter of said driving recess and the thickness of that head decreases outwardly of said driving recess.

6. The combination recited in Claim 1 further characterized in that the head on said nut is substantially dome-shaped to accommodate said driving means.

7. A threaded fastener comprising a bolt and a nut, said bolt having a head and a threaded shank, said shank having an end remote from the bolt head, said nut having a head with an outer face and an internally threaded barrel projecting from an inner face, said nut head having a non-circular driving recess in the outer face thereof, said threaded barrel providing an elongated threaded passage for receiving the shank of said bolt, said passage being in open communication with said driving recess whereby said shank can enter said recess when said nut is tightened on said bolt, the length of said bolt shank being substantially equal to the combined length of said nut barrel and said nut head, projection of the end of the threaded shank from the nut head being precluded while providing for a substantial grip range.

8. The combination recited in claim 7 further characterized in that the end of said nut barrel and the head of said bolt have complementary abutting surfaces which limit the extent to which said nut can be tightened on said bolt.

9. The combination recited in claim 8 further characterized in that the abutting surfaces on said bolt and said nut are frusto-conical surfaces.

10. The combination recited in claim 7 further characterized in that the head on said nut is substantially larger than the head on said bolt to accommodate said driving recess.

11. The combination recited in claim 7 further characterized in that the head on said nut is substantially larger in diameter than the diameter of said driving recess and the thickness of that head decreases outwardly of said driving recess.

12. The combination recited in claim 7 further characterized in that the head on said nut is substantially dome-shaped to accommodate said driving means.

**13.** The combination recited in claim 7 further characterized in that the length of the nut head comprises a substantial portion of the overall length of the nut.

FIG. 5

FIG. 6

European
Patent Office

EUROPEAN SEARCH
REPORT

Application Number

EP 90 11 5825

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 109 079   (DORADA WICKSTEED) <br> * the whole document * * <br> – – – | 1,4-7, 10-13 | F 16 B 37/00 <br> F 16 B 35/04 <br> F 16 B 5/02 <br> F 16 B 23/00 // <br> B 25 B 13/00 |
| X | US-A-3 370 631   (JAMES) <br> * the whole document * * <br> – – – | 1,4-7, 10-13 | |
| A | DE-C-342 446   (SIEBECK) <br> – – – | 3,9 | |
| D,A | US-A-3 241 408   (MCCAULEY) <br> * column 2, line 53 - line 56; figure 3 * * <br> – – – | 1 | |
| D,A | US-A-2 527 157   (SNYDER) <br> – – – | - | |
| D,A | US-A-3 648 549   (SIDDALL) <br> – – – | - | |
| D,A | US-A-3 821 975   (HAKER) <br> – – – | - | |
| D,A | US-A-3 584 667   (REILAND) <br> – – – – – | - | |

TECHNICAL FIELDS
SEARCHED (Int. Cl.5)

F 16 B

The present search report has been drawn up for all claims

| Place of search | Date of completion of search | Examiner |
|---|---|---|
| The Hague | 18 December 91 | VAN DER WAL W |